# EUROPEAN PATENT APPLICATION

(11) **EP 2 400 289 A1**
(43) Date of publication of application: **28.12.2011**
(21) Application number: 10166408.4
(22) Date of filing: 17.06.2010
(51) Int. Cl.: G01N 21/55, G01N 21/77

(54) **Integrated optical waveguide evanescent field sensor**

(71) Applicant: Optisense B.V., 7521 PA Enschede (NL)
(72) Inventor: Diemeer, Martinus Bernardus Johannes, 1906 AD, LIMMEN (NL)
(74) Representative: Hooiveld, Arjen Jan Winfried

(57) **Abstract**

Integrated optical waveguide evanescent field sensor (1) for sensing of chemical and/or physical quantities, comprising a substrate (2) carrying a waveguide layer structure provided with
- a waveguide core layer (3) sandwiched between two cladding layers (4,5) formed by a lower (4) and a upper cladding layer (5), of a lower refractive index than the waveguide core layer (3),
- a sensing section (7) comprising a sensing layer (10) included in the upper cladding layer, wherein said sensing layer is exchangeable as a separate element.

## Description

The invention relates to an integrated optical waveguide evanescent field sensor for sensing of chemical and/or physical quantities, comprising a substrate carrying a waveguide layer structure comprising
- a waveguide core layer sandwiched between two cladding layers formed by a lower and a upper cladding layer, of a lower refractive index than the waveguide core layer,
- a sensing section comprising a sensing layer included in the upper cladding layer.

Integrated optical waveguide evanescent field sensors can be used for sensing of chemical and/or physical quantities. During use, the sensor is usually connected to a measuring device with use of an optical fiber, wherein the optical fiber is optically connected to the waveguide core layer. A disadvantage of the known sensor is that sensing usually needs to be done by skilled persons.

It is an object of the invention to obviate this disadvantage in the sense that an integrated optical waveguide evanescent field sensor is provided wherein sensing can be done by any unskilled person.

In order to accomplish that objective, an integrated optical waveguide evanescent field sensor of the kind referred to in the introduction is characterized in that said sensing layer is exchangeable as a separate element.

By having the sensing layer of the sensor as a separate element, the sensing of chemical and/or physical quantities can easily be done by an unskilled person. For example, this is due to that only said separate element is exchanged for a new sensing session, such that any optical fiber connected to said sensor may remain connected to the remaining parts of said sensor. Since the connection of the sensor with the optical fiber is very precise, such that only skilled person can normally connect the sensor with the optical fiber, this allows for the sensing to be done by any (un)skilled person.

With sensors for sensing of chemical and/or physical quantities care must be taken that cross contamination of different sensors and/or in between sensing sessions does not occur. Because of the separate sensing layer according to the invention, cross contamination can be prevented because the sensing layer can be disposed after said sensing is done.

Another advantage is that a separate element allows for manufacturing the separate element apart from said sensor, thereby allowing more freedom of production and/or reduction of the production costs. Also, at the production site the separate element may be wrapped in such a way that it is protected from the environment. In this way contamination of the sensing layer of the sensor can be prevented.

Normally, the sensing layer must be applied to the sensor in a controlled environment, and therefore, also sensing normally takes place in the controlled environment. With a sensing layer that is exchangeable as separate element according to the invention, only the sensing layer may be manufactured in a controlled environment. After manufacturing, the sensing layer can be applied to the sensor anywhere, such that sensing can easily take place outside the controlled environment. This allows for more freedom of use of the sensor according to the invention.

Also, said separate element allows for the possibility to exchange the element for a different kind of element, such that different types of sensing can easily be done, without the need to replace the sensor completely. Therefore, the flexibility of use of the sensor according to the invention is enhanced.

In a preferred embodiment of the sensor according to the invention, said waveguide layer structure comprises a second waveguide core layer sandwiched between two second cladding layers formed by a second lower and a second upper cladding layer, of a lower refractive index than the second waveguide core layer. An advantage of this embodiment is that one of the first and second waveguide core layers can be used as a reference branch.

Preferably said sensor comprises a second sensing section comprising a second sensing layer included in said second upper cladding layer. This embodiment has the advantage that multiple sensing may be done, wherein different analyte molecules may be sensed. Also, the sensing of the same analyte molecules may be done at both sensing sections, such that the accuracy of the measurements may be improved. Further, one of the sensing layers may be chemically insensitive, such that this channel functions as the reference channel.

In a practical embodiment of the sensor according to the invention, the waveguide layer structure comprises a splitter for optically splitting a common input waveguide core layer into said first and second waveguide core layers at a first junction.

In another practical embodiment of the sensor according to the invention, the waveguide layer structure comprises a combiner for optically coupling said first and second waveguide core layers into a common output waveguide core layer at a second junction.

In another preferred embodiment of the sensor according to the invention, said sensing layer comprises a gel, particularly a hydrogel. A gel, particularly a hydrogel, has the advantage that the gel can easily be exchanged as a separate element because it provides enough structure to be handled, while forming itself to the part of the sensor that it is applied on, so that a good optical connection between the sensing layer and the core layer is provided. Normally, the sensing layer is adhered to the sensor by bonding, because it is thought that only by adhering the sensing layer to the core the optical connection will be good enough, because no gap may exist between the two layers. The gel has the advantage that the required optical connection can be provided because it forms itself to the sensor. Another advantage is that receptors, for example antibodies, can be applied to such a gel. The invention also relates to such a sensing layer comprising a gel for use in an integrated optical waveguide evanescent field sensor for sensing of chemical and/or physical quantities.

Preferably, said gel comprises a substance chosen from a group comprising agarose, acrylamide, polyacrylamide, polyethyleneglycol, polysaccharide and mixtures thereof.

Agarose, acrylamide, polyacrylamide, polyethyleneglycol, polysaccharide and mixtures thereof have the advantage that they may have a large pore size, up to 200 nm, thus allowing analyte molecules, such as proteins, in particular antibodies, to diffuse through the gel layer in order to reach the sensor surface, while particles that are larger than the pore size cannot diffuse through the gel surface. Also, receptor molecules can be covalently coupled to the substance, which receptor molecules may interact with the analyte molecules to be sensed.

Preferably, said gel comprises carboxymethylated, sulfonated and/or sulfated polysacharides.

An advantage of carboxymethylated, sulfonated and/or sulfated polysaccharides is that this allows the gel to be rehydrated. After applying the gel to the sensor, the gel may dry out, thereby reducing in thickness and pore size, such that it may not function well anymore as the sensing layer. By rehydrating the gel, the original gel structure, in particular the pore size, is reestablished. An additional advantage of carboxymethylated, sulfonated and/or sulfated polysaccharides is the use of well-established protocols for receptor molecule immobilization that are developed for these materials.

In yet another preferred embodiment of the sensor according to the invention said sensing layer comprises a carrier that is provided on the surface of the sensing layer that is facing away from said core layer. The carrier has the advantage that the sensing layer can easily be exchanged by holding the carrier without the need to touch the sensing layer itself. Thereby contamination of the sensing layer may be prevented.

Preferably, said carrier is made of a porous material. A porous material has the advantage that the carrier may directly be exposed to a sample material comprising analyte molecules, because the analyte molecules will seep through the porous carrier to the sensing layer.

In another embodiment of said sensor according to the invention said carrier contains micro-fluidic channels adapted for transporting the analyte molecules to the sensing layer. Such micro-fluidic channels have the advantage that the carrier may directly be exposed to the sample material comprising analyte molecules, because the analyte molecules will seep through the micro-fluidic channels to the sensing layer.

Preferably, said sensor comprises releasable force means adapted for applying a force on said sensing layer during sensing. Applying a force has the advantage that the optical connection between the sensing layer and the core layer is improved. Said releasable force means may comprise a mechanical and/or an electrostatic and/or a magnetic force.

Preferably, said first and/or said second lower cladding layer has/have a refractive index that is lower than the refractive index of the sensing layer and/or said first and/or said second upper cladding layer. In particular, the refractive index of the lower cladding layer may be lower than that of the sensing layer. An advantage of a lower cladding layer with a lower refractive index than that of the sensing layer is that the part of the light extending into the sensing layer can be increased.

In a practical configuration of the sensor according to the invention said substrate is formed by said first and/or said second lower cladding layer as one integral part.

The invention will now be explained in more detail with reference to figures illustrated in a drawing, wherein:
- figures 1A-1C show the steps of sensing with a first embodiment of the sensor according to the invention, wherein the sensing layer is mounted (1A), sensing (1B), and wherein the sensing layer is removed (1C);
- figures 2A-2C show the steps of sensing with a second embodiment of the sensor according to the invention, wherein the sensing layer is mounted (2A), sensing(2B), and wherein the sensing layer is removed (2C);
- figures 3A-3C show the steps of sensing with a third embodiment of the sensor according to the invention, wherein the sensing layer is mounted (3A), sensing(3B), and wherein the sensing layer is removed (3C);
- figure 4 is a cross-section of a fourth embodiment of the sensor according to the invention;
- figure 5 is a cross-section of a fifth embodiment of the sensor according to the invention; and
- figures 6A-6T are schematic representations of configurations of the sensor according to the invention.

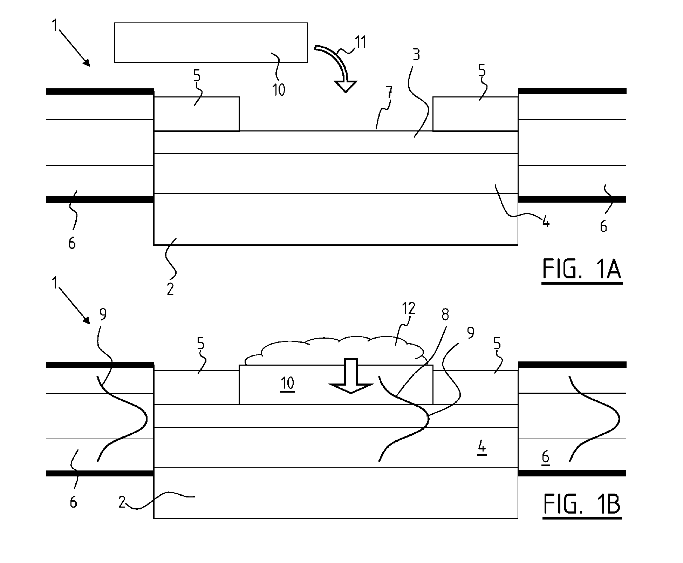

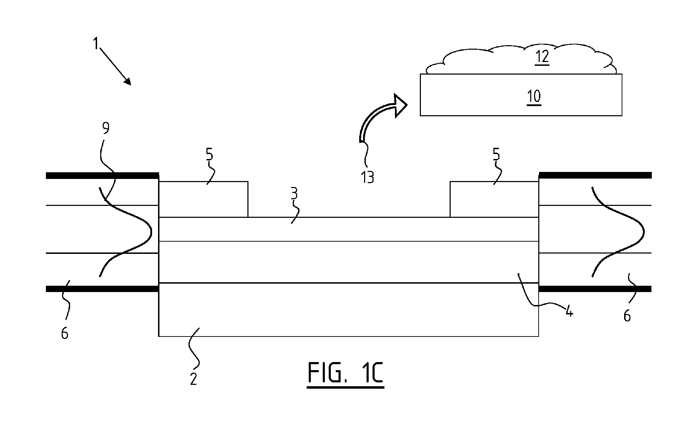

Figures 1A-1C show an integrated optical waveguide evanescent field sensor 1 for sensing of chemical and/or physical quantities, comprising a substrate 2 carrying a waveguide layer structure provided with a waveguide core layer 3 sandwiched between two cladding layers formed by a lower cladding layer 4 and a upper cladding layer 5, of a lower refractive index than the waveguide core layer. Coupled to both endzones of the sensor 1 are optical fibers 6, such that the optical fiber 6 is optically connected to the waveguide core layer 3.

In case of buried waveguides, the optical field is completely contained in the core and buffer layers and the propagation of light is not affected by environmental disturbances. By using etching techniques, the top cladding 5 is locally removed at well-defined positions. In this so-called sensing window 7, the evanescent field 8 of the light 9 that travels through waveguide layer structure, extents into the environment above the sensor 1 and becomes susceptible to environmental changes. A sensing layer 10 that binds specifically with analyte molecules of interest may be provided as an exchangeable element on the surface of the sensing window 7. The sensing layer 10 is a gel comprising a substance chosen from a group comprising agarose, acrylamide, polyacrylamide, polyethyleneglycol, polysaccharide and mixtures thereof. Preferably said gel comprises 0.1 to 10% of said substance, preferably 0.2 to 5%, even more preferably 0.5 to 2%. The gel may also comprise carboxymethylated,sulfonated and/or sulfated polysaccharides. Preferably said gel comprises 0.25 to 5% carboxymethylated, sulfonated and/or sulfated polysaccharides, preferably 0.5%.

As is shown in figure 1A, the sensing layer 10 is provided to the sensor 1 in the direction of arrow 11. Figure 1B shows, that in use, the sensing layer 10 is exposed to a sample material 12 , wherein specific binding of the analyte molecules to the sensing layer 10 in the sensing window 7 is probed by the evanescent field 8 of the light 9 travelling through the waveguide layer structure. This causes a change of the propagation speed of the light which is a measure of the amount of analyte molecules binding to the sensing layer 10. When the sensing is done, the sensing layer 10 may be disposed in the direction of arrow 13.

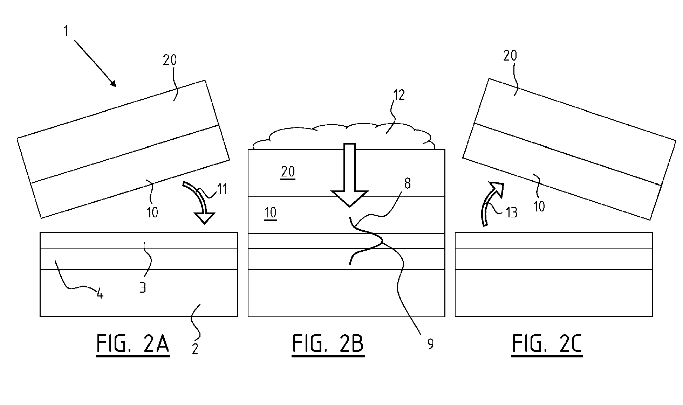

Figure 2 show a second embodiment of the sensor 1 according to the invention, wherein said sensing layer 10 comprises a porous carrier 20 that is provided on the surface of the sensing layer 10 that is facing away from said core layer 3. The sensing layer 10 can easily be provided to said sensor 1 with use of the carrier 20, which carrier 20 can easily be held by a user for displacing the sensing layer 10, thereby not touching the sensing layer 10 such that contamination may be prevented. As is shown in figure 2B, for sensing, the sample material 12 is exposed to the carrier 20 of the separate element, such that analyte molecules will seep through the porous carrier 20 to the sensing layer 10. After sensing is done, the separate element may easily be removed with use of the carrier 20.

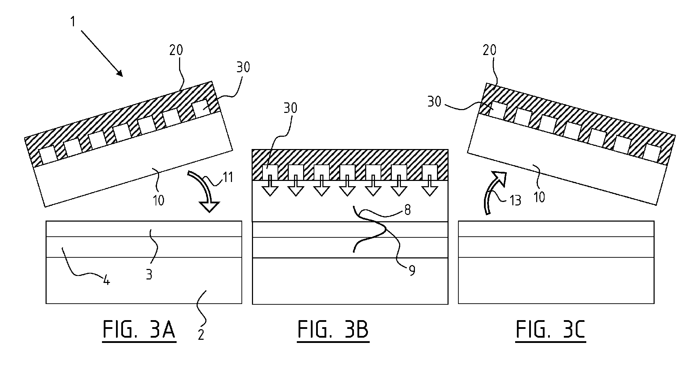

Figure 3 shows a third embodiment of the sensor 1 according to the invention. As is shown, in this embodiment the carrier 20 comprises micro-fluidic channels 30 adapted for transporting the analyte molecules to the sensing layer 10.

Optionally, releasable force means adapted for applying a force on said sensing layer 10 during sensing are present (not shown). The releasable force means for example comprise a mechanical force in the form exerting a pressure on the carrier 20.

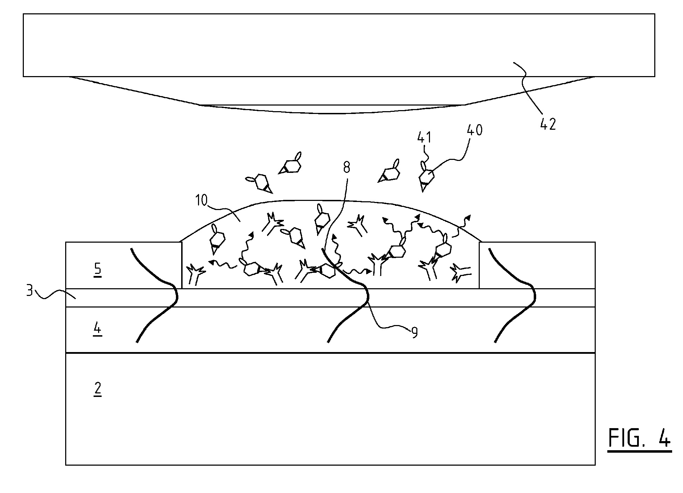

Figure 4 shows a fourth embodiment of the sensor 1 according to the invention. In this embodiment the analyte molecules 40 comprise fluorescent labels 41, such that when the evanescent field 8 of the light 9 travels through the sensing layer 10 the bonded molecules 40 are excited and will become fluorescent. The fluorescence of the sensing layer 10 is measured by a CCD camera 42, such that the fluorescence is a measure for the amount of analyte molecules binding to the sensing layer 10.

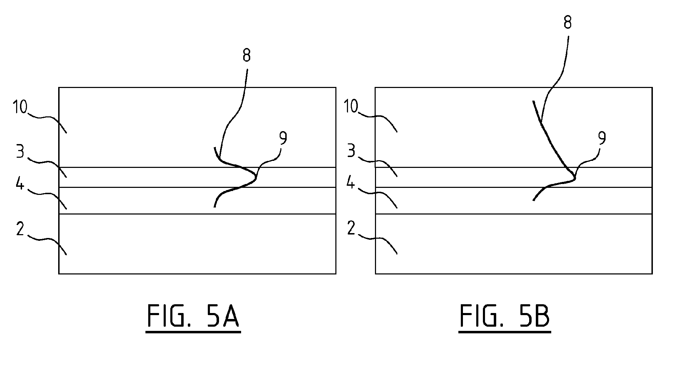

Figure 5B shows a fifth embodiment of the sensor 1 wherein the lower cladding layer 4 has a refractive index that is lower than the refractive index of the sensing layer 10. It is clear when figure 5B is compared to figure 5A, wherein the refractive index of the lower cladding layer 4 is higher or equal than that of the sensing layer 10, that the evanescent field 8 extending into the sensing layer 10 is increased due to this lower refractive index. Therefore, accuracy of the measurements can be improved.

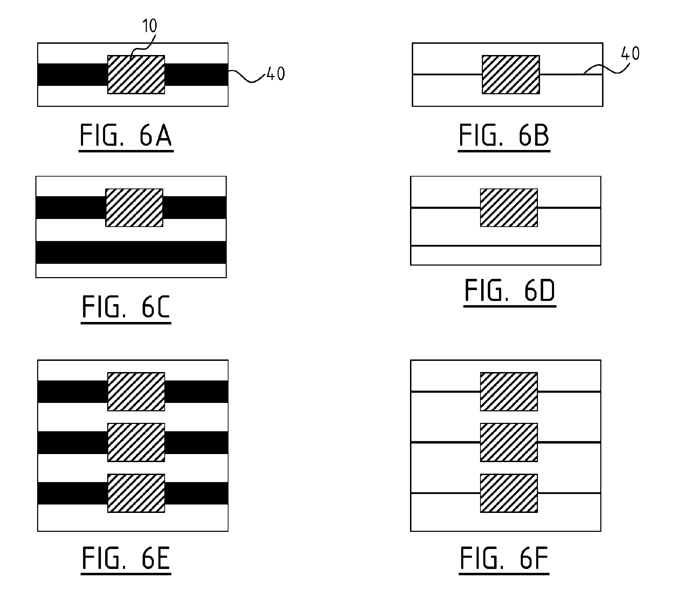

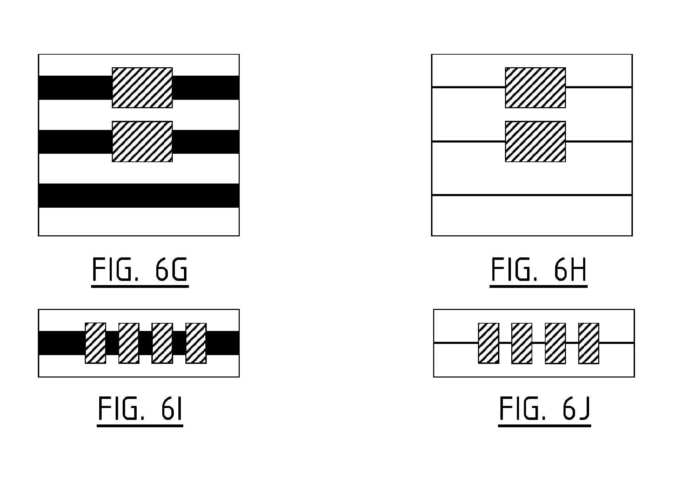

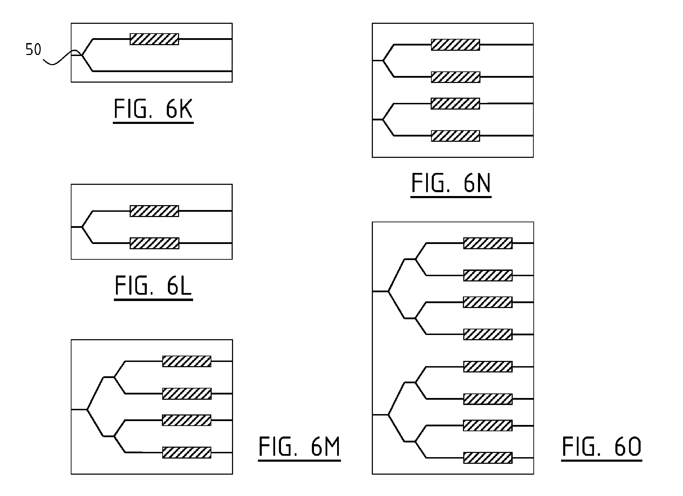

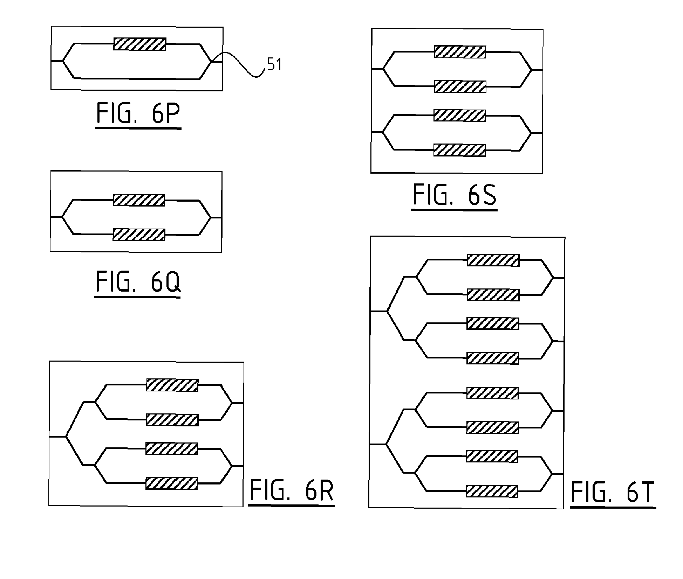

Figures 6A-T show several configurations of the sensor according to the invention. As appears from these figures, many configurations are possible. Therefore, it is clear that that these figures are not exclusive. Further, it is clear that all these possible configurations and/or not shown configurations fall within the scope of the appended claims. For clarity, the elements are numbered only in some figures.

Figure 6A shows a configuration wherein the waveguide layer structure 40 is formed as a single path. Such a sensor is also called a planar waveguide sensor. This is a cheap and simple configuration of the sensor according to the invention.

Figure 6B shows a configuration wherein the waveguide layer structure 40 is formed as a single channel. Such a sensor is also called a channel waveguide sensor. This is a cheap and simple configuration of the sensor according to the invention.

Figures 6C and 6D show configurations wherein the waveguide layer structure 40 is formed as two parallel paths, respectively two parallel channels, wherein only one of the paths or channels comprises a sensing layer 10. The path or channel without the sensing layer 10 may act as a reference branch. Because no specific binding occurs in the reference branch due to the absence of the sensing layer 10, the propagation speed of the light does not change, thus resulting in a phase difference between light coming from the sensing branch and the reference branch. The induced phase difference is proportional to the amount of analyte molecules binding to the sensing layer 10.

Figures 6E and 6F show configurations wherein the waveguide layer structure 40 is formed as three parallel paths, respectively three parallel channels, wherein all of the paths or channels comprise a sensing layer 10. Multiple paths or channels each comprising a sensing layer 10 have the advantage that different analyte molecules may be sensed at the same time. Also, one of the paths or channels may comprise a sensing layer 10 that shows no specific binding, such that this branch may act as a reference branch. Because no specific binding occurs in the reference branch, the propagation speed of the light does not change, thus resulting in a phase difference between light coming from the sensing branch and the reference branch. The induced phase difference is proportional to the amount of analyte molecules binding to the sensing layer 10. Also, the accuracy of the sensing may be improved due to multiple sensing branches.

Figures 6I and 6J show configurations with an array with sensing sections comprising sensing layers 10. These configurations have the advantage that with use of only one branch, multiple and/or different sensing sessions can be done at the same time.

Figures 6K-6T show configurations wherein multiple parallel channels may have one common input channel and/or one common output channel. The sensor 1 therefore comprises a splitter for optically splitting the common input waveguide core layer into said first and second waveguide core layers at a first junction 50 and/or a combiner for optically coupling said first and second waveguide core layers into a common output waveguide core layer at a second junction 51.

The invention is not restricted to the variants shown in the drawing, but it also extends to other preferred embodiments that fall within the scope of the appended claims.

## Claims

1. Integrated optical waveguide evanescent field sensor for sensing of chemical and/or physical quantities, comprising a substrate carrying a waveguide layer structure comprising
- a waveguide core layer sandwiched between two cladding layers formed by a lower and a upper cladding layer, of a lower refractive index than the waveguide core layer,
- a sensing section comprising a sensing layer included in the upper cladding layer, **characterized in that** said sensing layer is exchangeable as a separate element.

2. Integrated optical waveguide evanescent sensor according to claim 1, wherein the waveguide layer structure comprises a second waveguide core layer sandwiched between two second cladding layers formed by a second lower and a second upper cladding layer, of a lower refractive index than the second waveguide core layer.

3. Integrated optical waveguide evanescent sensor according to claim 2, wherein the sensor comprises a second sensing section comprising a second sensing layer included in said second upper cladding layer.

4. Integrated optical waveguide evanescent sensor according to claim 2 or 3, wherein the waveguide layer structure comprises a splitter for optically splitting a common input waveguide core layer into said first and second waveguide core layers at a first junction.

5. Integrated optical waveguide evanescent sensor according to claim 2, 3 or 4, wherein the waveguide layer structure comprises a combiner for optically coupling said first and second waveguide core layers into a common output waveguide core layer at a second junction.

6. Integrated optical waveguide evanescent sensor according to claim 1, 2 or 3, wherein said sensing layer comprises a gel, particularly a hydrogel.

7. Integrated optical waveguide evanescent sensor according to claim 6, wherein said gel comprises a substance chosen from a group comprising agarose, acrylamide, polyacrylamide, polyethyleneglycol, polysaccharide and mixtures thereof.

8. Integrated optical waveguide evanescent sensor according to claim 6 or 7, wherein said gel comprises carboxymethylated, sulfonated and/or sulfated polysacharides.

9. Integrated optical waveguide evanescent sensor according to any of the preceding claims 1-8, wherein said sensing layer comprises a carrier that is provided on the surface of the sensing layer that is facing away from said core layer.

10. Integrated optical waveguide evanescent sensor according to claim 9, wherein said carrier is made of a porous material.

11. Integrated optical waveguide evanescent sensor according to claim 9, wherein said carrier comprises micro-fluidic channels adapted for transporting an analyte to the sensing layer.

12. Integrated optical waveguide evanescent sensor according to any of the preceding claims 1-11, further comprising releasable force means adapted for applying a force on said sensing layer during sensing.

13. Integrated optical waveguide evanescent sensor according to any of the preceding claims 1-12, wherein said first and/or said second lower cladding layer has/have a refractive index that is lower than the refractive index of the sensing layer and/or said first and/or said second upper cladding layer.

14. Integrated optical waveguide evanescent sensor according to any of the preceding claims 1-13, wherein said substrate is formed by said first and/or said second lower cladding layer as one integral part.
